Europäisches Patentamt

European Patent Office

Office européen des brevets

(19)

(11) Publication number: **0 191 487**
A2

(12) **EUROPEAN PATENT APPLICATION**

(21) Application number: 86101822.4

(22) Date of filing: 13.02.86

(51) Int. Cl.⁴: **A 23 G 3/00,** A 23 G 9/02,
A 23 P 1/16, A 23 L 1/19

(30) Priority: 14.02.85 JP 25194/85

(43) Date of publication of application: 20.08.86
Bulletin 86/34

(84) Designated Contracting States: AT CH DE FR GB LI NL
SE

(71) Applicant: **TOYO JOZO CO., LTD., 632-1, Mifuku
Ohito-cho, Tagata-gun Shizuoka-ken (JP)**

(72) Inventor: **Hara, Shoujirou, 872-22, Kumasaka
Shuzenjicho, Tagata-gun Shizuoka-ken (JP)**

(74) Representative: **Dipl.-Ing. H. Marsch Dipl.-Ing. K. Sparing
Dipl.-Phys.Dr. W.H. Röhl Patentanwälte,
Rethelstrasse 123, D-4000 Düsseldorf (DE)**

(54) Composition for foam foods.

(57) Herein disclosed are compositions for multi-cellular
foods such as ice cream, bavarian cream or mousse which
comprise gelatin, alginic acid and/or sodium alginate, edi-
ble fats and oils such as vegetable oil, animal oil, coconut
oil, palm oil etc., and balance of water and which may op-
tionally be overrun, the composition makes it possible to
improve the multi-cellular food products in their shape re-
taining ability even at a relatively high temperature and in
the resistance to water separation from the thawed food
products, and these properties being maintained even
when the acidic foods such as fruit juice or jam or sour milk
beverages are added thereto, furthermore, the composition
being solidified at a relatively high temperature, thus the
process for manufacturing multi-cellular foods can greatly
be simplified.

SPECIFICATION

TITLE OF THE INVENTION

COMPOSITION FOR FOAM FOODS

BACKGROUND OF THE INVENTION

Field of the Invention:

The present invention relates to a composition for forming foam foods (or multi-cellular foods) such as ice cream, bavarian cream, mousse and more particularly the invention pertains to a composition for foam foods, capable of maintaining the form previously imparted thereto even at a relatively high temperature and even when acidic food ingredients are added.

Description of the Prior Art

The multi-cellular (or whipped) foods such as ice cream, bavarian cream, mousse or the like are a kind of foam food which is, in general, prepared by overrunning or whipping an emulsion in the form of oil in water composed of edible fats and oils including milk fat, a sweetener, a seasoning agent, an emulsion stabilizer, a gelling agent and the like to form a multi-cellular product and then cooling or freezing the multi-cellular product (overrun emulsion). In such composition, it is necessary to improve the quality or physical properties thereof according to the consumers' needs

1

and to extend the market of the composition.

There have conventionally been proposed various kinds of methods for preparing such multi-cellular foods. For example, Japanese Patent Publication No. 12548/1979 discloses a method comprising adding 0.7 to 5% by weight of gelatin treated with acid (A Type Gelatin) and 0.01 to 0.5% by weight of carrageenin, based on the total weight of the final product, to an ingredient of confectionery, agitating the mixture under cooling to form a partially frozen multi-cellular or foamed material and then freezing the foamed material by cooling it to less than -15°C. In addition, the Japanese Patent Laid-Open Appln. No. 130560/1976 discloses another method comprising adding 1 to 3% by weight of gelatin or the like to an usual ingredients of ice cream and then cooling the mixture at a temperature of from -4°C to -60°C in a freezer while overrunning the mixture. Moreover, the Japanese Patent Publication No. 22504/1984 discloses a method for preparing foam foods, which comprises adding 1 to 6% by weight of gelatin solution to 5 to 20% by weight of edible fats and oils or an emulsified liquid containing such fats and oils as the principal ingredient, based on the total amount of the final product, whipping the mixture after uniformly mixing and then solidifying the foam obtained.

However, the multi-cellular foods produced according to these conventional methods have a significant disadvantage such that although they are excellent in their shape retaining property so far as they are cooled or frozen to solidify, while they lose their original shape and water contained is separated out therefrom during standing them at around room temperature for a while. Therefore, these foods lose their shape during transferring or conveying at relatively high temperature, for example, in the course of bringing them back to consumer's home. In addition, water contained is also severely separated out therefrom during storing at a relatively high temperature. Thus, if such foam foods are inserted into or wrapped with a crust made of corn or wheat powder such as crust of cream puff having a relatively high water absorption property, the water separated out is absorbed and often makes the crust clammy. As a result, the crum lose its shape and is easily broken. Furthermore, the conventional emulsified composition also causes the separation of water during storing at a relatively high temperature, prior to subject it to overrunning procedure. In the worst case, the water separated out is accumulated at the bottom of a container for storage and this becomes, in turn, quite harmful to the subsequent overrunning procedure.

Under such circumstances, the inventor of this application has eagerly conducted studies on the foam foods to eliminate the problems encountered in the conventional techniques for manufacturing multi-cellular foods such as ice cream etc. Thus, the inventor found that the composition for multi-cellular foods having an excellent shape retaining property, even at a relatively high temperature without causing the separation of water, can be obtained by adding a desired amount of gelatin treated with alkali (B Type Gelatin) and carrageenin.

The problem of causing the destruction of shape and the separation of water therefrom can effectively be solved according to the inventor's own technique aforementioned. However, as a resent trend, such composition for foam foods has been used together with an acidic foods such as fruit juice, fruit jam or acidic milk according to the consumer's taste, and therefore, these composition must not cause water separation and the destruction of shape even under such conditions. However, it is found that the composition causes the reduction in the shape retaining ability when it is used together with the foods containing acidic component.

BRIEF EXPLANATION OF THE INVENTION

As mentioned above, it is a recent trend that multi-cellular foods flavored with a various kind of fruit component and having different fruit taste are favorable. Therefore, the composition for multi-cellular foods should be stable even under the presence of acidic fillers such as fruit component and maintain its shape retaining property as well as they must not squeeze out water included therein even

4

if it is maintained at a relatively high temperature. Thus, there is a great need for developing new composition for foam foods which fulfils the aforementioned requirements.

A principal object of this invention is, thus, to provide a composition for multi-cellular foods such as ice cream, bavarian cream or mousse.

Another object of this invention is to provide such composition excellent in its shape retaining property even if it is maintained at, for example, room temperature after it is formed in a desired shape by cooling or freezing.

A further object of this invention is to provide a composition for multi-cellular foods, having an excellent shape retaining property even under the presence of acidic additives such as fruit juice, fruit jam, acidic milk (such as kefir) and having no tendency to separate water component even when the final product obtained from the composition is left as it is under a relatively high temperature.

A still further object of this invention is to provide a composition for multi-cellular foods, which is overrun or whipped and has the same properties as those mentioned above.

The above mentioned and other objects and the features of this invention can be accomplished or appreciated by providing a composition comprising, on the basis of total weight of the composition, 0.5 to 5% by weight of gelatin, 0.05 to 1% by weight of alginic acid and or sodium alginate and 5 to 40% by weight of fats and oils which may or may not

5

include milk fat, or a composition comprising the ingredients mentioned above and further having 0 to 200% of the degree of overrunning.

DETAILED EXPLANATION OF THE INVENTION

The composition for multi-cellular foods of this invention is characterized by the fact that a combination of a desired amount of gelatin and alginic acid or sodium alginate or the mixture thereof is used. As examples of gelatin preferably used in the composition according to the invention, there may be mentioned such as gelatin treated with an acid or an alkali such as HCl, NaOH, KOH and the gelatin preferably has a jelly strength of at least 150 bloom. The amount of gelatin used is 0.5 to 5% by weight of the total weight of the composition and the preferred amount thereof falls within the range of from 0.7 to 1.5% by weight as demonstrated in examples disclosed below. If gelatin is used in an amount falling within the preferred range, the resulting composition makes it possible to impart an excellent shape retaining property and an excellent overrun property to a final multi-cellular food products.

In the composition, alginic acid and/or sodium alginate can be used in an amount of from 0.05 to 1% by weight of the total weight of the composition and the most preferred amount thereof falls within the range of from 0.1 to 0.3% by weight since the composition containing such component in a

6

preferred amount allows a final product obtained therefrom to maintain a good shape retaining property and resistance to water separation even at a high temperature (around room temperature). Among these, sodium alginate has a good solubility to water, while alginic acid is hardly soluble in water, thus, alginic acid is preferably used in the form of an alkaline aqueous solution containing a small amount of alkali such as sodium hydroxide.

According to the composition of this invention, 5 to 40% by weight of fats and oils inclusive of or without milk fat component is, generally, used. As examples of fats and oils preferably used in the composition of this invention, there may be mentioned such as animal and vegetable oils, for instance, milk fat which is the fat derived from milk component, coconut oil, cottonseed oil, palm oil, beef tallow or hydrogenated oils thereof or the mixture thereof.

In addition to the fats and oils component mentioned above, solid nonfat milk such as powdered skim milk and whey proteins such as casein, powdered whey, whey cheese, lactoalbumin may also be added to the composition. They may be used in an amount at most 10% by weight based on the total amount of the composition. Furthermore. vegetable proteins such as been protein may be used as the auxiliary component for the lactoprotein.

Moreover, in the composition of the invention, water is, of course, included as the balance component, which is in

7

general included in an amount at most 70% by weight of the total weight of the composition.

The composition according to the present invention may also contain different kind of additives other than those mentioned above and conventionally utilized, such as a sweetener, an unsaturated fatty acid, a seasoning agent. There may be mentioned such as natural sweetener, for example, sugar, candy powder and artificial sweetener, for example, aspartame, stevioside, saccharin, glycyrrhizin and the mixture thereof, as the sweetener as used in the composition of this invention. The preferred unsaturated fatty acid is arachidonic acid, linoleic acid, eicosapentaenoic acid, and the preferred seasoning agent may be wine, brandy, rum or liqueur.

To the composition according to the present invention, there may be added foods having acidic taste such as fruit components and acidic milk without impairing the resistance to water separation and the shape retaining property. As such fruit component it is desirable to use juice, jam or puree of apple, strawberry apricot, blueberry, orange, lemon, plum, grape, pineapple, mandarin orange, raspberry, tangerine and as such acidic milk component, sour milk, lactic fermentation beverages, milk beverages containing lactic acid may preferably be added to the composition.

These foods having acidic taste may be used singly or as

8

a mixture containing at least two of them and further they may be added to the composition according to the present invention at any step of the manufacturing process, however, it is more preferred to add them after the overrunning procedure.

The composition of the present invention is generally in the form of emulsion and therefore, a small amount of an emulsifier is utilized, which may be any one of the conventional known emulsifier such as glycerin fatty acid ester, sorbitan fatty acid ester, sucrose fatty acid ester, lecithin of bean, propylene glycol fatty acid ester, yolk or mixture thereof. They may be used in an amount at most 2% by weight based on the total weight of the composition.

The composition according to the invention may easily be prepared according to the following methods which, briefly speaking, comprise mixing a selected combination of desired ingredients mentioned above to form an emulsified composition. In particular, a specific embodiment comprises mixing and heating fats and oils and milk component other than milk fat under the presence of a desired amount of water; adding an emulsifier and heating the resulting mixture; then adding a sweetener, a seasoning agent and eventually about 0.2% by weight of a polyphosphate such as sodium tripolyphosphate, sodium metaphosphate, potassium pyrophosphate; homogenizing the mixture obtained; then mixing the resulting mixture with preparations containing alginic

9

acid and/or sodium salt thereof separately prepared by mixing alginic acid and/or sodium salt thereof and optionally about 0.1% by weight of a gum substance such as locust bean gum, xanthane gum, tamarind gum, guar gum, pectin, carrageenin, gum arabic, furcellaran or a mixture thereof under the presence of water to dissolve or swell the gum substance.

Another embodiment of the process for preparing the composition comprises the same procedures as those mentioned above except that the emulsifier is used in the form of an aqueous solution separately prepared, instead of adding the same directly to the mixture of fats and oils and water as in the case of the first method. A further method comprises preparing an aqueous solution of emulsifier; adding fats and oils component to the aqueous solution; then homogenizing the mixture; adding and mixing an aqueous solution of gelatin, which is swelled with water, and alginic acid or sodium salt thereof to form an emulsified composition having the above mentioned composition. It is a matter of course that the amount of water contained therein is at most 70% by weight of the total amount of the composition obtained as already mentioned above.

The present invention further intends to provide a composition having the same composition but the degree of overrun is adjusted, which may also be prepared easily by overrunning or whipping the composition over a desired time and the overrun composition per se is also edible as

10

multi-cellular foods. The preferred degree of overrun is in the range of from 50 to 200%.

The composition according to the invention is quite effective to form a various kind of multi-cellular foods (foam foods) such as ice cream, bavarian cream or mousse and makes it possible to improve the shape retaining property and the resistance to water separation of the final food products even if such product is formed in a desired shape, for example, by cooling or freezing the whipped composition.

Such effects may also be obtained when using the composition in which a combination of gelatin treated with an alkali and carrageenin is used in a desired amount, however, this composition causes the reduction of shape retaining ability and the increase in the water separation when acidic additives such as fruit component or sour milk are present and when the resulting multi-cellular foods are maintained at a relatively high temperature for a certain time.

While according to the composition of the invention, such problems encountered in the above composition can effectively be solved. Therefore, various kinds of foam foods having a taste of fruits or sour milk can be prepared utilizing the composition of this invention. For example, even if the overrun composition or the composition containing acidic foods according to the invention is inserted in or covered with a food material having a high water absorption property such as bread or crust made from wheat powder, the

11

food materials never grow sticky and are not destroyed due to the absorption of water separated and thus, the overrun composition is surely held therein, because of its high shape retaining ability and resistance to water separation. The overrun product according to the invention can easily be handled as a food such as whipped cream as well as it may also be possible to provide a new type of confectionery, for example, ice product obtained by combining it with wheat powder product, such as a food consisting of the overrun composition packed in a hole like a canoe formed in the French bread, a food consisting of crust and the multi-cellular food of the invention charged therein, a food obtained by putting the foam food between two pieces of biscuit.

The shape retaining property of the overrun composition makes it possible to retain the shape previously imparted thereto and good taste and texture even when the foods are again freezed after thawing it.

The composition according to the invention per se may be stored before overrunning and the emulsified state may be maintained and the separation of water is not caused. Thus, the composition may be subjected to overrunning step without further additional treatment.

Moreover, the solidifying property of the composition can surely be maintained even around 10°C or higher and therefore, it is not necessary to carry out the overrunning

12

procedures while cooling as in the case of conventional methods for preparing ice cream. Ice cream can be prepared by freezing the composition after overrunning the same at a relatively high temperature. This makes the preparation procedure more simpler. In addition, the composition according to the invention permits the production of multi-cellular foods having quite fine and smooth texture compared with those of the conventional foam foods.

The present invention will now be explained in the light of reference examples given below. In the following examples, the term "%" stands for --% by weight based on the total amount of the composition --- , otherwise specified.

Reference Example 1

This example was carried out to find out the optimum amount of alginic acid and/or sodium salt thereof.

First of all, liquid (A) was prepared by mixing 39.5% of ingredients for dairy product containing a vegetable oil, milk fats and solid nonfat milk component as the principal ingredients (which includes 12.5% of vegetable oil, 0.5% of milk fats and 3.7% of solid nonfat milk component) with 9.2% of water, heating the resulting mixture up to 30 to 40°C before adding 0.25% of glycerin fatty acid ester (monoglyceride; manufactured and sold by Riken Vitamin Co., Ltd. under the trade name of Emulgy MS) and 0.15% of sorbitan fatty acid ester (sorbitan monostearate; manufactured and sold by Nippon Oil and Fats Co., Ltd. under the trade name of Nonion SP-60R) to the mixture and mixing and solubilizing them under agitation.

To the liquid (A), there were added 15% of sugar and 5% of wine and then heated up to 60°C to sufficiently admix these ingredients. Thereafter, the product was homogenized in a homogenizer to obtain liquid (B).

While, two series of stabilizer liquids (C) were prepared by mixing the required amount of water, gelatin treated with alkali and having the jelly strength of 350 bloom (one group containing 0.7% and the other 1.5%) and alginic acid in an amount of 0 to 0.5% (specified below), then adding a small amount of concentrated sodium hydroxide solution under stirring to adjust pH of the mixture to 6 and standing the product for several hours to cause sufficient swelling and finally heating it to 60°C.

Then, the liquid (B) and each liquid (C) were mixed together and heated to 75°C for 30 minutes to sterilize them. The mixed liquids thus prepared were examined on their physical properties:

(i) Measurement of Gel Strength on the Frozen Product Prior to Overrunning Treatment.

Each mixed liquid sample was introduced into a beaker of 100cc and cooled in a refrigerator at 5°C overnight before subjecting the liquid to gel strength measurement which was carried out according to the following method.

14

Measuring Apparatus:    Rheometer NRM-2002J (FUDO INDUSTRIES Co., Ltd.)

Adapter:  a circular disc type adapter of 1cm in diameter

Rising Speed of the Sample-Supporting Table:  2cm/min.

Critical Sensitivity to Load:  200g

The gel strength is specified as a maximum load required to indent the sample surface by 3cm when the table supporting the sample to be examined is moved upward at the speed mentioned above to push the surface against the adapter.

(ii)  Measurement of the Degree of Overrun

The mixed liquids were cooled to 5°C to form gelatinous products and then overrun according to a conventional technique.  As the overrunning operation was proceeded, the volume of the resulting multi-cellular cream became larger than that of the original gelatinous product.  The increase in volume during the overrunning procedure is referred to as "Overrun (%)" which can be calcurated according to the following equation:

$$\text{Overrun (\%)} = \frac{\text{(weight of the mixed composition)} - \text{(weight of the overrun cream having the volume equal to the starting mixed composition)}}{\text{(weight of the overrun cream obtained from the starting mixed composition)}} \times 100$$

(iv)  Measurement of the Shape Retaining Property

Ten samples of cream having "overrun" of about 75% were prepared in a cup of 100cc by cooling the overrun cream to

15

-40°C and divided into two groups. Each sample of one group was standed for 3 hours at 25°C, thereafter the degree of deformation in shape was determined on each sample and then the resulting shape was compared with those of the samples belonging to the other group and remaining the original shape. The degree of deformation was estimated according to the following standards:

5+ ... Almost liquid state;

4+ ... The original shape was not maintained at all;

3+ ... Half of the original shape was maintained;

2+ ... The original shape was almost maintained, however, severe deformation was commenced;

+ ... The original shape was almost maintained, while sag was observed in a slight extent;

- ... The original shape was completely retained and no sag was observed

The results obtained in the above four tests are listed in the following Tables I and II. The results listed in Table I are obtained by using the mixed liquid in which 0.7% of gelatin treated with alkali is included, while Table II shows the results on the mixed liquids containing 1.5% of gelatin treated with alkali.

16

Table I      Dependence of different properties of the composition upon the amount of alginic acid    (gelatin:  0.7%)

| Sample No. | Amount of Alginic Acid (%) | Gel Strength (g) | Resistance to Water Separation | Overrun (%) | | | (*) |
|---|---|---|---|---|---|---|---|
| | | | | 5 min. | 10 min. | 15 min. | |
| 1 | 0 | 12 | Separation | 87.1 | 125.2 | 151.5 | 5+ |
| 2 | 0.05 | 16 | Slight Separation | 92.2 | 130.7 | 155.2 | 3+ |
| 3 | 0.1 | 20 | no Separation | 95.9 | 135.3 | 162.1 | − |
| 4 | 0.2 | 28 | do. | 101.8 | 143.2 | 180.7 | − |
| 5 | 0.3 | 34 | do. | 103.3 | 142.9 | 183.5 | − |
| 6 | 0.4 | 41 | do. | 96.7 | 138.9 | 165.5 | − |
| 7 | 0.5 | 50 | do. | 89.3 | 131.7 | 157.6 | − |

Table II      Dependence of different properties of the composition upon the amount of alginic acid    (gelatin:  1.5%)

| Sample No. | Amount of Alginic Acid (%) | Gel Strength (g) | Resistance to Water Separation | Overrun (%) | | | (*) |
|---|---|---|---|---|---|---|---|
| | | | | 5 min. | 10 min. | 15 min. | |
| 8 | 0 | 79 | Separation | 79.8 | 120.0 | 129.3 | 4+ |
| 9 | 0.05 | 82 | Slight Separation | 80.9 | 120.5 | 124.5 | 2+ |
| 10 | 0.1 | 86 | no Separation | 81.6 | 118.7 | 130.3 | − |
| 11 | 0.2 | 94 | do. | 83.0 | 117.1 | 136.6 | − |
| 12 | 0.3 | 101 | do. | 85.5 | 112.9 | 141.2 | − |
| 13 | 0.4 | 110 | do. | 80.1 | 108.5 | 135.3 | − |
| 14 | 0.5 | 119 | do. | 79.7 | 111.2 | 133.8 | − |

* Shape Retaining Property

As seen from the results listed in Tables I and II, it was observed that the overrun composition formed in a desired shape by cooling and containing no alginic acid component (Sample 1) is insufficient in its resistance to water separation and shape retaining property and that the sample 2 in which alginic acid is added in an amount less than 0.1% causes a slight separation of water and has low shape retaining property. While it was found, in the samples 3 to 7 containing alginic acid component, that water separation can effectively be restricted and they show a high degree of overrun and a good shape retaining property.

In the cases where gelatin treated with alkali is used in an amount of 1.5% (see Table II), the gel strength of the resulting product becomes higher than those shown in Table I and therefore, the degree of overrun thereof decreases if the amount of alginic acid used is greater than 0.3% and the texture thereof is less smooth than that of the samples 1 to 7 listed in Table I, in which the amount of gelatin treated with alkali is equal to 0.7%.

Moreover, if alginic acid is added or used in an amount more than 0.4%, it is observed that the resulting ice cream has the appearance like starch glue and rather mediocre taste and texture.

Thus, it is concluded that the amount of alginic acid used should be at least 0.05%, while there is no critical upper limit thereof. However, on the economical point of view, it is preferred to be about 1%. The most preferred amount thereof falls within the range of from 0.1 to 0.3% as seen from the results listed in the Tables I and II. In the light of the degree of overrun, the above mentioned range is also considered to be preferred and the degree of overrun of 50 to 200% can surely be attained by using alginic acid in such amount.

It should be said that alginic acid of a high quality is used in the above reference example and that alginic acid suffers from aging, thereby causing the reduction in its viscosity (consistency), therefore, it is sometimes necessary to use alginic acid in an amount more than the aforementioned upper limit in order to assure the identical effects.

Reference Example 2

This example is effected to find out the optimum amount of gelatin to be added to the composition for foam foods.

The procedures in Reference Example 1 are repeated except that different amount of gelatin treated with alkali, which falls within the range of from 0 to 5% (clearly specified in the following Table III) are used to form six samples 15 to 20, while alginic acid is used in an amount of 0.2%.

The resulting composition was examined on their physical properties which were measured according to the same procedures as those disclosed in Reference Example 1 and the results obtained are listed in the following Table III.

19

Table III    Dependence of different properties of the composition upon the amount of gelatin    (alginic acid:  0.2%)

| Sample No. | Amount of Alginic Acid (%) | Gel Strength (g) | Resistance to Water Separation | Overrun (%) | | | (*) |
|---|---|---|---|---|---|---|---|
| | | | | 5 min. | 10 min. | 15 min. | |
| 15 | 0 | 6 | no Separation | 99.3 | 140.8 | 149.5 | 4+ |
| 16 | 0.5 | 18 | do. | 108.7 | 148.3 | 179.2 | 2+ |
| 17 | 0.7 | 28 | do. | 103.2 | 145.9 | 180.6 | – |
| 18 | 1.5 | 94 | do. | 80.5 | 119.2 | 137.1 | – |
| 19 | 3.0 | 215 | do. | 72.3 | 110.1 | 122.2 | – |
| 20 | 5.0 | 383 | do. | 63.9 | 93.1 | 114.1 | – |

* Shape Retaining Property

From the foregoing results listed in Table III, it is found that the shape retaining property is insufficient in the case where the amount of gelatin is less than 0.5% and that the degree of overrun (%) is very low if gelatin is used in an amount ranging from 3 to 5%.  In the latter case, it is also observed that there remains a small amount of lumps in the product even after overrunning, which impairs the taste and texture in a large extent.  Thus, it is concluded that the preferred amount of gelatin treated with alkali used in the composition according to the invention falls within the range of from 0.7 to 1.5% in the light of the shape retaining property, the degree of overrun and the taste and texture of the final food products.

The composition according to the present invention will be explained in more detail in the light of the practical Examples which simply illustrates the invention and do not limit the scope of this invention.

Example 1

As in the reference example 1, a liquid (A) was prepared by mixing 39.5% of dairy product, composed of 12.5% of vegetable oils, 0.5% of milk fats and 3.7% of solid components of nonfat milk, with 9.2% of water, heating the resulting mixture up to 30 to 40°C and then adding 0.25% of glycerin fatty acid ester (see Reference Example 1) and 0.15% of sorbitan fatty acid ester (see Reference Example 1) under stirring to solubilize them.

Then, homogenized liquid (B) was prepared by adding 15% of sugar and 5% of wine to the liquid (A) obtained above, heating the mixture to 60°C and stirring it, thereafter homogenizing in a homogenizer. On the other hand, a stabilizer solution (C) was separately prepared by mixing 0.7% of gelatin treated with alkali, the jelly strength of which is 320 bloom, 0.2% of alginic acid and 30% of water, adjusting pH of the mixture to 6.0 by the addition of a small amount of concentrated sodium hydroxide solution and standing it for several hours to cause swelling and finally heating to 60°C.

The liquids (B) and (C) were mixed together to form a

21

mixed liquid product and it was heated at 75°C for 30 minutes to sterilize. A part of the product was left to stand as it is at 30°C overnight and then subjected to measurement of the resistance to water separation, the degree of overrun and the shape retaining property. These measurement were carried out according to the same procedures as those disclosed in Reference Example 1. The results are shown in the following Table IV together with results obtained in other examples and comparative examples hereunder disclosed.

The product of this example was solidified at 10 to 20°C during overrunning while the conventional multi-cellular foods must be overrun at about -5°C to cause solidification. This means that the solidification of the composition for foam foods can effectively be attained even at a relatively high temperature and the composition does not require the refrigeration during overrunning. Thus the composition according to the invention makes it possible to simplify the production process.

In addition, the overrun product obtained according to this example is an ice cream like product having a quite smooth texture and good taste during being in the frozen state, while after thawing, the product provides the taste and texture like bavarian cream or mousse.

Example 2

A mixed liquid product was prepared according to the

22

process of the example 1 except that the homogenized solution (B) used herein was prepared according to the following procedures and the resistance to water separation, the gel strength, the degree of overrun and the shape retaining property were determined on the resulting mixed liquid product, according to the procedures of the example 1.

Preparation of the liquid (B):

The liquid (B) was prepared by mixing 1% of glycerin fatty acid ester, 0.5% of sorbitan fatty acid ester and 30.6% of water together, heating the resulting mixture at 60°C, thereafter dissolving 5% of skim milk, adding and mixing 10% of palm oil, further adding 12% of sugar, 5% of powder candy and 5% of wine and finally homogenizing the mixture utilizing homogenizer.

The resulting overrun product of this example provides extremely smooth texture and taste and has an ice cream like appearance during freezing and presents the taste and texture like bavarian cream or mousse during being in the thawed state.

Example 3

In this example, a liquid (C) (stabilizer solution), separately prepared by mixing 0.7% of gelatin treated with alkali (the jelly strength of which being 320 bloom), 0.2% of sodium alginate and 30% of water, standing the mixture as it

23

is to cause swelling and then heating it to 60°C, was used instead of the liquid (C) used in the example 1.

Then, according to the example 1, a mixed liquid product was obtained by mixing the liquids (B) and (C) and the properties thereof were measured as in the example 1.

The products obtained in this example, prior to and after the overrunning procedure had the same properties, such as the shape retaining ability, the resistance to water separation and the appearance, as those obtained in the example 1, respectively.

Example 4

A liquid (C) different from that used in the example 1 was employed herein, which was prepared by mixing 0.7% of gelatin treated with alkali (the jelly strength thereof being 320 bloom), 0.2% of alginic acid and 30% of water, adjusting pH of the resulting mixture to 6.0 with the addition of a small amount of a concentrated sodium hydroxide solution, standing the mixture as it is for several hours and heating it to 60°C.

According to the procedures of the example 1, a mixed liquid product was prepared by admixing the liquids (B) and (C) obtained above and on the resulting liquid product properties were determined by the same procedures as those disclosed in the example 1.

The product prior to overrunning, obtained in this

24

example, has the same level of the resistance to water separation as that of the product obtained in the example 1, but differs in the gel strength and degree of overrun which are rather inferior to those of the product prepared in the example 1.

While the overrun product of this example was an ice cream like appearance during freezing and, during being in thawed state, presents the same taste and texture as those of bavarian cream or mousse as compared with the product of the example 1. However, the shape retaining property of the product is slightly inferior to that of the example 1, in the thawed state.

Comparative Example 1

According to the procedures in the example 1 and using the liquids of the same example, a mixed liquid product was prepared, except that the liquid (C) used was newly prepared by mixing 1.6% of gelatin treated with alkali (the jelly strength thereof being 170 bloom) and 29.1% of water without the addition of alginic acid and then heating the mixture obtained at 60°C. The resulting mixed liquid solution was subjected to the measurement of properties according to the same method as in the example 1.

Either of the overrun product obtained prior to freezing or after thawing or prepared at room temperature presents ice cream like appearance or has the taste and texture like

25

bavarian cream or mousse, however, in comparing it with the product of the example 1, the product obtained at room temperature and that in the thawed state were somewhat soft. Moreover, the resistance to water separation of the product prior to overrunning and the shape retaining ability of the product after thawing were rather low compared with those of the example 1.

Comparative Example 2

Instead of the liquid (C) used in the example 1, a different liquid (C) was prepared and used in this comparative example. The liquid (C) was prepared by mixing 0.7% of gelatin treated with alkali (the jelly strength thereof being 320 bloom), 0.3% of carrageenin and 29.9% of water and then heating the resulting mixture to 70°C. A mixed liquid product was prepared as in the example 1 and the properties thereof were determined according to the method described in the example 1.

Each one of the overrun products obtained according to the comparative example, which were in the frozen state or in the thawed state or were prepared at room temperature, presents ice cream like appearance and has the taste and texture similar to those of the bavarian cream or mousse. Moreover, the product prior to overrunning procedure was quite excellent in the resistance to water separation and had a high degree of overrun, compared with the product of the

26

example 1. The thawed product was also excellent in the shape retaining ability.

However, these properties of the product obtained in this comparative example were reduced, if an acidic foods such as a fruit juice component is added, as hereunder disclosed.

Comparative Example 3

A stabilizer solution (C) was prepared by mixing 0.7% of gelatin treated with acid, having the jelly strength of 320 bloom, 0.3% of carrageenin and 29.9% of water and then heating the mixture to 70°C. A mixed liquid product was then prepared according to the procedure disclosed in the example 1 except for using a newly prepared stabilizer solution (C) instead of the liquid (C) including alginic acid as in the example 1 and the properties thereof were examined according to the method as set forth in the example 1.

The gel strength of the product prior to overrunning was extremely low compared with those of the product prior to the overrunning obtained in the examples 1 and 4. As a result, the taste and texture of the overrun product which was in frozen state, in thawed state or which was prepared at room temperature were not acceptable. Moreover, the shape retaining ability of the thawed product was also insufficient.

The result obtained in these aforementioned examples 1

27

to 4 and comparative examples 1 to 3 are summarized in the following Table IV.

28

Table IV

| No. of Example or Comp. Ex. | Amount of Gelatin Used (%) | Amount of Alginic Acid or Carrageenin (%) | Gel Strength (g) | Resistance to Water Separation | Overrun (%) | | | Shape Retaining Property |
|---|---|---|---|---|---|---|---|---|
| | | | | | 5 min. | 10 min. | 15 min. | |
| Example 1 | Gelatin Treated with Alkali 0.7 | Alginic Acid 0.2 | 29 | no Separation | 103.2 | 147.5 | 180.8 | - |
| 2 | do. 0.7 | do. 0.2 | 30 | do. | 109.6 | 149.3 | 186.5 | - |
| 3 | do. 0.7 | Sodium Alginate 0.2 | 28 | do. | 106.5 | 144.2 | 183.2 | - |
| 4 | Gelatin Treated with Acid 0.7 | Alginic Acid 0.2 | 22 | do. | 88.2 | 121.9 | 139.1 | + |
| Comparative Example 1 | Gelatin Treated with Alkali 1.6 | 0 | 35 | Separation | 85.8 | 108.2 | 113.6 | 3 + |
| 2 | do. 0.7 | Carrageenin 0.3 | 42 | no Separation | 88.2 | 114.7 | 151.5 | - |
| 3 | Gelatin Treated with Acid 0.7 | do. 0.3 | 5 | do. | 55.3 | 58.7 | 68.1 | 5 + |

0 191 487

Example 5

Cylindroid-like French bread having the length of 20 to 25cm and the width of 5 to 6cm was hollowed out on its side to form a canoe-like hole and each overrun cream obtained in the examples 1 to 4 was charged into the hole and cooled to -40°C to form French bread packed with ice cream.

The resulting French bread was crosswise cut in several round slices. When eating the sliced bread containing ice cream, it was found that the bread provides a very good taste and texture due to the combination of flavor and texture of French bread and smooth texture and taste of the ice cream. This makes it possible to prepare a quite new and delicious conventionally unknown ices. In addition, the bread charged with ice cream does not cause the deformation and dripping of the ice cream even at ambient temperature and further when the bread was again frozen after thawing, the sliced piece of the bread per se was in the state suitable for eating and still held its taste sufficiently.

Example 6: Preparation of Overrun Cream Containing Fruit Juice or Jam

To the overrun cream obtained in the example 1 there was added concentrated liquid preparations of raspberry juice or raspberry jam containing 7.5% of raspberry fruit component in the amount corresponding to 15% based on the total weight of the final product and mixed thoroughly to form a overrun cream containing fruit juice or jam.

The overrun cream containing acidic component thus obtained never shows the separation of water included therein. The frozen product presents quite smooth texture and taste and deformation and dripping are not observed on the thawed product, because of its high shape retaining ability even under the presence of acidic component such as fruit juice or jam.

In addition, these results obtained on the product according to the example 6 were compared with those obtained in the following comparative example 4. The results are listed in Table V.

Comparative Example 4

To the overrun cream obtained in the Comparative example 2, there was added an acidic food according to the same procedure as in the example 6 to form a comparative sample of overrun cream containing fruit juice or fruit jam. The product obtained causes water separation at the ambient temperature and this provides quite rough texture and taste if it is frozen, while the product causes deformation and dripping in the thawed state due to the low shape retaining ability.

31

Table V    Comparison between the products of
           Example 6 and Comparative Example 4

| No. of Example or Comparative Example | Stabilizer | Resistance to Water Separation | (*) | Shape Retaining Property |
|---|---|---|---|---|
| Example 6 | Gelatin Treated with Alkali + Alginic Acid | no Separation | Quite Smooth | - |
| Comparative Example 4 | Gelatin Treated with Alkali + Carrageenin | Separation | Very Rough | 5+ |

* The Texture and Taste of the Overrun Cream
  During Being Frozen

Example 7

     To each overrun cream prepared in the examples 1 to 4,
there was added 5 to 20% of raspberry jam or fruit juice
thereof to form overrun cream containing acidic food.  Then,
the resulting overrun cream was packed into the hole of the
French Bread as in the case of the example 5 and the bread
was frozen at -40°C and thus French Bread charged with the
ice cream containing fruit juice or jam was prepared.

     While, according to the same procedures as disclosed
above, overrun cream containing fruit juice or jam was
prepared utilizing each overrun cream obtained in the
comparative examples 1 to 3.  The resulting ice cream causes

32

a severe water separation and further the shape retaining ability thereof is also quite low, therefore, there is observed a severe deformation and dripping.

While, in comparing with these comparative products, the ice cream of the example 7 causes no water separation and has a greatly improved shape retaining ability.

Example 8:  Preparation of Overrun Cream Containing Sour Milk

Commercially available plain yoghurt was added to and mixed with the overrun cream prepared in the examples 1 to 4 in an amount of ranging from 5 to 10% to form ice cream containing sour milk and the ice cream was introduced into the crust of cream puff to form an ice product. The shape retaining ability of this product is quite excellent and therefore, there are observed no deformation and dripping of the ice cream from the crust of the cream puff. The cream puff like product per se thus prepared may be frozen and provide a cream puff containing sour ice cream having a quite smooth texture and taste.

Example 9

The overrun cream prepared in any one of the examples 1 to 4 was introduced between two pieces of biscuit. The resulting sandwich-like confectionery per se is edible at ambient temperature and provides good taste. Moreover, if the sandwich-like product is frozen, it becomes a sandwich-like biscuit having a good taste and texture, in which ice cream is inserted therebetween.

What is claimed is:

1. A composition for multi-cellular foods comprises, based on the total weight of the composition, 0.5 to 5% by weight of gelatin, 0.05 to 1% by weight of alginic acid, sodium alginate or a mixture thereof and 5 to 40% by weight of fats and oils which may or may not include milk fats.

2. A composition for multi-cellular foods as set forth in claim 1 wherein the fats and oils are animal and vegetable fats and oils inclusive of milk fats.

3. A composition for multi-cellular foods as set forth in claim 1 in which the foods contain an acidic food.

4. A composition for multi-cellular foods as set forth in claim 3 wherein the acidic food is at least one member selected from the group consisting of fruit juice, fruit jam, fruit puree and acidic milk foods.

5. A composition for multi-cellular foods comprises, based on the total weight of the composition, 0.5 to 5% by weight of gelatin, 0.05 to 1% by weight of alginic acid, sodium alginate or a mixture thereof, and 5 to 40% by weight of fats and oils which may or may not contain milk fats and the degree of overrun being in the range of from 0 to 200%.

6.     A composition for multi-cellular foods as set forth in claim 5 wherein the degree of overrun is in the range of from 50 to 200%.

7.     A composition for multi-cellular foods as set forth in claim 6 wherein the fats and oils are animal and vegetable fats and oils inclusive of milk fats.

8.     A composition for multi-cellular foods as set forth in claim 6 wherein the multi-cellular foods contain an acidic food.

9.     A composition for multi-cellular foods as set forth in claim 8 in which the acidic food is at least a member selected from the group consisting of fruit juice, fruit jam, fruit puree and acidic milk foods.